# EUROPEAN PATENT APPLICATION

(11) **EP 4 778 772 A1**
(43) Date of publication of application: **22.07.2026**
(21) Application number: 25227375.0
(22) Date of filing: 29.12.2025
(51) Int. Cl.: B60L 53/00

(54) **CHARGING/DISCHARGING MANAGEMENT DEVICE AND CHARGING/DISCHARGING MANAGEMENT SYSTEM**

(30) Priority: 16.01.2025 JP 2025006027
(71) Applicant: Prime Planet Energy & Solutions, Inc., Chuo-ku, Tokyo 103-0022 (JP)
(72) Inventor: KOH, Hideki, Tokyo, 103-0022 (JP)
(74) Representative: Kuhnen & Wacker Patent- und Rechtsanwaltsbüro PartG mbB

(57) **Abstract**

In a charging/discharging management device, a reservation manager manages a discharging recommendation time zone when a user makes a reservation for a reservation time zone in which a vehicle is charged from a discharging recommendation time zone in which a facility charging/discharging device in a charging/discharging facility recommends discharging. A charging/discharging manager makes a charging/discharging plan such that a remaining battery level of the vehicle approaches a departure charging amount based on a required charging amount of the vehicle required for the vehicle traveling from an owned facility to a charging/discharging facility, at a departure time at an end of a stay time zone in which the user stays in the owned facility.

## Description

### BACKGROUND

The present invention relates to a charging/discharging management device and a charging/discharging management system.

JP2022-75351 discloses a charge management system that manages electric power transferred between an electric vehicle and each of a first facility and a second facility where the electric vehicle travels back and forth. The charge management system includes an information acquirer and an information notifier.

The information acquirer acquires charging information on charging to a storage battery for driving the electric vehicle by a charging device installed in the first facility for charging the storage battery. The information notifier is communicably connected to a presentation device to be used by a user of the second facility that is a destination of the electric vehicle. Based on the charging information, the information notifier generates, as priority information, information on a usable priority power amount using a storage battery in the second facility, and notifies the presentation device of the priority information.

This enables management of electric power transferred between the electric vehicle and each of the first facility and the second facility.

### SUMMARY

An inventor of the present teaching considers that it is preferable to efficiently charge a vehicle and, in charging the vehicle, to supply a larger amount of power in a charging/discharging facility provided with a charging/discharging device outside.

A charging/discharging management device disclosed here includes: a reservation manager; and a charging/discharging manager. The reservation manager includes a time zone acquirer, a user notifier, a reservation acquirer, and an updater. The time acquirer acquires a discharging recommendation time zone, the discharging recommendation time zone being a time zone in which a facility charging/discharging device in a charging/discharging facility recommends discharging. The user notifier notifies a user using a vehicle including a secondary battery as a driving source, of the discharging recommendation time zone. The reservation acquirer acquires a reservation time zone in which the facility charging/discharging device is used in the discharging recommendation time zone, from the user notified by the user notifier. The updater updates the discharging recommendation time zone to prevent other users from making a reservation for using the facility charging/discharging device in the reservation time zone. The charging/discharging manager includes a first planning acquirer, a second planning acquirer, a third planning acquirer, and a planner. The first planning acquirer acquires a current remaining battery level, the current remaining battery level being a current remaining level of the secondary battery in the vehicle. The second planning acquirer acquires a stay time zone in which a user stays in an owned facility owned by the user. The third planning acquirer acquires a required charging amount, the required charging amount being a charging amount required for the vehicle traveling from an owned-facility position that is a position of the owned facility to a facility position that is a position of the charging/discharging facility. The planner makes a charging/discharging plan for charging and discharging the vehicle by an owned charging/discharging device in the owned facility such that a remaining battery level of the secondary battery in the vehicle approaches from the current remaining battery level to a departure charging amount set based on the required charging amount by a departure time at an end of the stay time zone.

In the charging/discharging management device disclosed here, a user makes a reservation for a reservation time zone in which the user wants to charge a vehicle from the discharging recommendation time zone in which the user wants to actively discharge the vehicle by the facility charging/discharging device. This enables the vehicle to be efficiently charged in the discharging recommendation time zone. In addition, the charging/discharging plan is made such that the remaining battery level of the vehicle approaches the departure charging amount based on the required charging amount required for the vehicle traveling from the owned facility to the charging/discharging facility, with respect to the user who has reserved the reservation time zone. Accordingly, the owned charging/discharging device in the owned facility charges and discharges the vehicle in accordance with the charging/discharging plan so that the remaining battery level of the vehicle can be brought close to the departure charging amount at the departure time. As a result, while driving the vehicle from the owned facility to the charging/discharging facility, it is possible to supply a larger amount of power to the vehicle in the charging/discharging facility.

### BRIEF DESCRIPTION OF THE DRAWINGS

FIG. 1 is a conceptual view illustrating a charging/discharging management system according to a preferred embodiment.
FIG. 2 is a block diagram of the charging/discharging management system according to the preferred embodiment.
FIG. 3 is a table showing an example of a discharging recommendation time zone.
FIG. 4 is a flowchart showing a procedure of managing a reservation for charging a vehicle in the discharging recommendation time zone.
FIG. 5 is a flowchart showing a procedure of determining whether or not to notify a discharging recommendation time.
FIG. 6 is a flowchart showing a procedure of canceling a reservation for charging the vehicle.
FIG. 7 is a flowchart showing another procedure of canceling a reservation for charging the vehicle.
FIG. 8 is a flowchart showing a procedure of making a charging/discharging plan.

### DETAILED DESCRIPTION

One preferred embodiment of a charging/discharging management system including a charging/discharging management device disclosed here will be described with reference to the drawings. The preferred embodiment described here is, of course, not intended to particularly limit the present teaching. The present teaching is not limited to the embodiment disclosed here unless otherwise specified. Members and parts having the same functions are denoted by the same reference numerals as appropriate, and description for the same members and parts will not be repeated as appropriate.

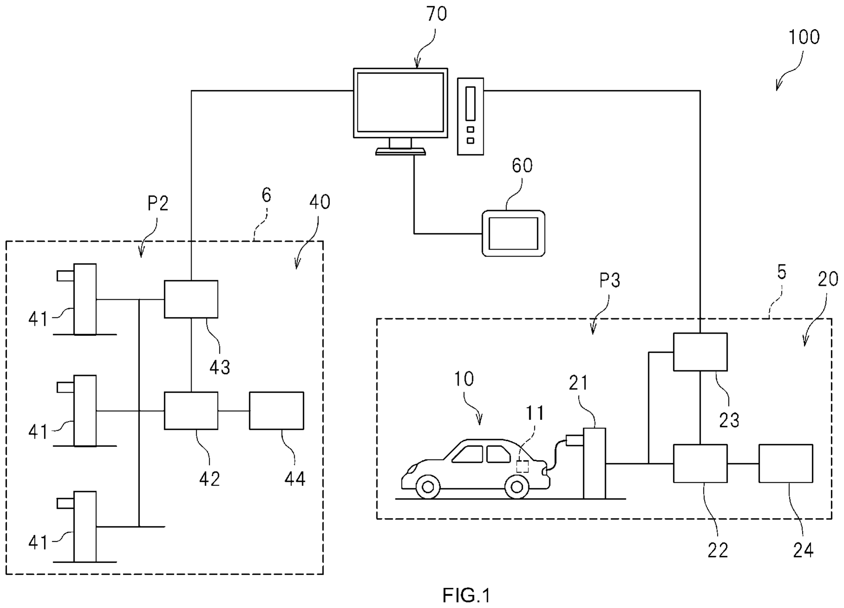

FIG. 1 is a conceptual view illustrating a charging/discharging management system 100 according to this preferred embodiment. The charging/discharging management system 100 according to this preferred embodiment is a system that manages charging and discharging of the vehicle 10. In this preferred embodiment, the vehicle 10 is a user to be used by a user. The user as used herein is a customer of a management company that manages the power management system 100, and is a user registered in the power management system 100. The vehicle 10 is, for example, a vehicle including a secondary battery 11 as a driving source. The secondary battery 11 can be repeatedly charged and discharged by movement of charge carriers between a pair of electrodes (e.g., a positive electrode and a negative electrode) via an electrolyte, for example. As the secondary battery 11, a battery such as a lithium ion secondary battery or a nickel hydrogen battery may be used. In this preferred embodiment, secondary battery 11 is a lithium ion secondary battery. The vehicle 10 is an electric vehicle using electric power of an battery electric vehicle, a hybrid electric vehicle, or a plug-in hybrid electric vehicle as a driving source. The vehicle 10 may be a four-wheeled vehicle or a two-wheeled vehicle. Charging and discharging of the vehicle 10 herein refer to charging and discharging of the secondary battery 11 mounted on the vehicle 10.

In this preferred embodiment, the charging/discharging management system 100 is implemented by, for example, a client server system. Alternatively, the charging/discharging management system 100 may be implemented by cloud computing. As illustrated in FIG. 1, the charging/discharging management system 100 includes an owned charging/discharging unit 20 installed in an owned facility 5 owned by a user, a facility charging/discharging unit 40 installed in a charging/discharging facility 6, a user terminal 60, and a charging/discharging management device 70.

The owned facility 5 is a facility that can charge and discharge the vehicle 10. The owned facility 5 is a small-scale facility. The owned facility 5 is, for example, a house owned by a user. The term "house" as used herein is not particularly limited with regard to whether or not the user resides therein. For example, the house may be a residence for the user (in other words, a building), or may be a rental house. The owned facility 5 is not limited to a house as long as the owned facility 5 is owned by a user. The owned facility 5 may be, for example, an office operated by a user. In the owned facility 5, it is assumed to charge and discharge mainly the vehicle 10 used by a user. The number owned facilities 5 is one in an example of FIG. 1, but may be two or more. That is, the number of the owned facilities 5 managed by the charging/discharging management system 100 may be one or more.

The owned charging/discharging unit 20 is installed in the owned facility 5. As illustrated in FIG. 1, the owned charging/discharging unit 20 includes an owned charging/discharging device 21, an owned power storage device 22, an owned renewable energy power generation device 24, and an owned controller 23.

The owned charging/discharging device 21 is installed in the owned facility 5. The owned charging/discharging device 21 is installed in, for example, a parking lot of the owned facility 5. The owned charging/discharging device 21 charges and discharges the vehicle 10 (specifically, the secondary battery 11 mounted on the vehicle 10). For example, the owned charging/discharging device 21 includes a connection plug (not shown) to be connected to the vehicle 10. The owned charging/discharging device 21 connects the connection plug to the vehicle 10 so that the owned charging/discharging device 21 can change and discharge the vehicle 10 connected to the connection plug. The number of owned charging/discharging devices 21 installed in one owned facility 5 is not particularly limited. In this example, one owned charging/discharging device 21 is used in one owned facility 5, but a plurality of owned charging/discharging devices 20 may be used in one owned facility 5.

The owned power storage device 22 is a device that stores electric power. Electric power stored in the owned power storage device 22 may be, for example, electric power supplied from an electric power company, that is, purchased electric power from a commercial system or renewable energy power that is electric power by renewable energy. In this preferred embodiment, electric power stored in the owned power storage device 22 includes both purchased electric power and renewable energy power. Renewable energy power is electric power generated by the owned renewable energy power generation device 24 that generates electric power using renewable energy. Examples of an energy source of the renewable energy include sunlight, wind power, water power, geothermal heat, solar heat, heat existing in the atmosphere or in nature, and biomass.

In this preferred embodiment, the owned renewable energy power generation device 24 is connected to the owned power storage device 22. The owned renewable energy power generation device 24 is a device that generates renewable energy power. In this preferred embodiment, the owned renewable energy power generation device 24 is, for example, a solar power generation device including a solar panel and using sunlight as an energy source. The owned renewable energy power generation device 24 is, for example, installed in the owned facility 5 and owned by a user.

The owned power storage device 22 is connected to the owned charging/discharging device 21. Electric power stored in the owned power storage device 22 is supplied to the owned charging/discharging device 21. The owned charging/discharging device 21 can charge the vehicle 10 using electric power stored in the owned power storage device 22. Electric power discharged toward the owned charging/discharging device 21 is supplied to the owned power storage device 22. The owned charging/discharging device 21 can supply electric power discharged from the vehicle 10 to the owned power storage device 22.

As illustration FIG. 1, the owned controller 23 manages the owned charging/discharging device 21 in the same owned facility 5. For example, the owned controller 23 can manage and control whether or not the vehicle 10 is connected to the owned charging/discharging device 21, the timing and speed of charging or discharging of between the owned charging/discharging device 21 and the vehicle 10, and so forth. The owned controller 23 manages the owned power storage device 22 (e.g., power storage amount of the owned power storage device 22) in the same owned facility 5. The owned controller 23 is electrically connected to the owned charging/discharging device 21 and the owned power storage device 22. The configuration of the owned controller 23 is not particularly limited. The owned controller 23 is, for example, a microcomputer. The owned controller 23 includes, for example, an I/F, a CPU, a ROM, and a RAM. The owned controller 23 may be implemented by a single computer or a plurality of computers. The owned controller 23 may be implemented by, for example, a personal computer.

As illustrated in FIG. 1, the charging/discharging facility 6 is a facility that can charge and discharge the vehicle 10. The charging/discharging facility 6 is a large-size facility compared to the owned facility 5. Unlike the owned facility 5, the charging/discharging facility 6 is a facility that can charge and discharge the vehicle 10 used by an unspecified number of people. The charging/discharging facility 6 is, for example, a commercial facility. The commercial facility is a shopping mall, a supermarket, a drugstore, or the like. The charging/discharging facility 6 is not limited to the commercial facility as long as the charging/discharging facility 6 can charge and discharge the vehicle 10. The charging/discharging facility 6 may be, for example, a public facility such as a government office or a community center, a medical facility such as a hospital, or an office such as a company. If the charging/discharging facility 6 is an office, the charging/discharging facility 6 is a facility that can charge and discharge the vehicle 10 owned by the office or the vehicle 10 used by employees of the office. The number charging/discharging facilities 6 is one in the example of FIG. 1, but may be two or more. That is, the number of the charging/discharging facilities 6 managed by the charging/discharging management system 100 may be one or more.

The facility charging/discharging unit 40 is installed in the charging/discharging facility 6. As illustrated in FIG. 1, the facility charging/discharging unit 40 includes a facility charging/discharging device 41, a facility power storage device 42, a facility renewable energy power generation device 44, and a facility controller 43.

The facility charging/discharging device 41 is installed in the charging/discharging facility 6. The facility charging/discharging device 41 is installed in, for example, a parking lot of the charging/discharging facility 6. The facility charging/discharging device 41 charges and discharges the vehicle 10 (specifically, the secondary battery 11 mounted on the vehicle 10). In this case, the facility charging/discharging device 41 and the owned charging/discharging device 21 differ only in the facilities where these devices are installed, and have the same basic configuration. The facility charging/discharging device 41 includes a connection plug (not shown) to be connected to the vehicle 10. The facility charging/discharging device 41 can charge and discharge the vehicle 10 connected to the connection plug. The number of facility charging/discharging devices 41 installed in one charging/discharging facility 6 is not particularly limited. For example, from the viewpoint in which it is preferable for the charging/discharging facility 6 to be able to charge and discharge a large number of vehicles 10, the number of facility charging/discharging devices 41 installed in one charging/discharging facility 6 is preferably plural.

The facility power storage device 42 is a device that stores electric power. For example, the facility power storage device 42 differs from the owned power storage device 22 only in the facilities where these devices are installed, and has a configuration similar to that of the owned power storage device 22. Electric power stored in the facility power storage device 42 may be purchased electric power from a commercial system such as an electric power company or renewable energy power. In this preferred embodiment, electric power stored in the facility power storage device 42 includes both purchased electric power and renewable energy power.

The facility renewable energy power generation device 44 is a device that generates renewable energy power. In this preferred embodiment, the facility renewable energy power generation device 44 is, similarly to the owned renewable energy power generation device 24, a solar power generation device using sunlight as an energy source, and includes, for example, a solar panel. The renewable energy power generation device 44 is installed in the charging/discharging facility 6. The facility renewable energy power generation device 44 is connected to the facility power storage device 42.

The facility power storage device 42 is connected to the facility charging/discharging device 41. Electric power stored in the facility power storage device 42 is supplied to the facility charging/discharging device 41. The facility charging/discharging device 41 can charge the vehicle 10 using electric power stored in the facility power storage device 42. Electric power discharged toward the facilities charging/discharging device 41 is supplied to the facilities power storage device 42. The facility charging/discharging device 41 can supply electric power discharged from the vehicle 10 to the facility power storage device 42.

As illustrated in FIG. 1, the facility controller 43 manages the facility charging/discharging device 41 and the facility power storage device 42 in the same charging/discharging facility 6. For example, the facility controller 43 can manage and control whether or not the vehicle 10 is connected to the facility charging/discharging device 41, the timing and speed of charging or discharging between the facility charging/discharging device 41 and the vehicle 10, and so forth. The facility controller 43 can manage the power storage amount of the facility power storage device 42, and so forth. The facility controller 43 is electrically connected to the facility charging/discharging device 41 and the facility power storage device 42. The configuration of the facility controller 43 is not particularly limited. Similarly to the owned controller 23, the facility controller 43 is, for example, a microcomputer. The facility controller 43 includes, for example, an I/F, a CPU, a ROM, and a RAM. The facility controller 43 may be constituted by a single computer or a plurality of computers. The facility controller 43 may be implemented by, for example, a personal computer.

In this preferred embodiment, the charging/discharging management system 100 manages charging and discharging of the owned charging/discharging device 21 and charging and discharging of the facility charging/discharging device 41.

The user terminal 60 illustrated in FIG. 1 is a terminal to be used by a user using the vehicle 10. In other words, the user terminal 60 is a terminal to be used by a user who owns the owned facility 5. The number of user terminals 60 is not particularly limited. In the example illustrated in FIG. 1, the number of user terminals 60 is one, but may be a number equal to or greater than the number of users registered in the charging/discharging management system 100, for example. The user terminal 60 is, for example, a smartphone, a tablet terminal, a personal computer of a desktop type or a laptop type used by the user. Alternatively, the user terminal 60 may be, for example, a car navigation system mounted on the vehicle 10.

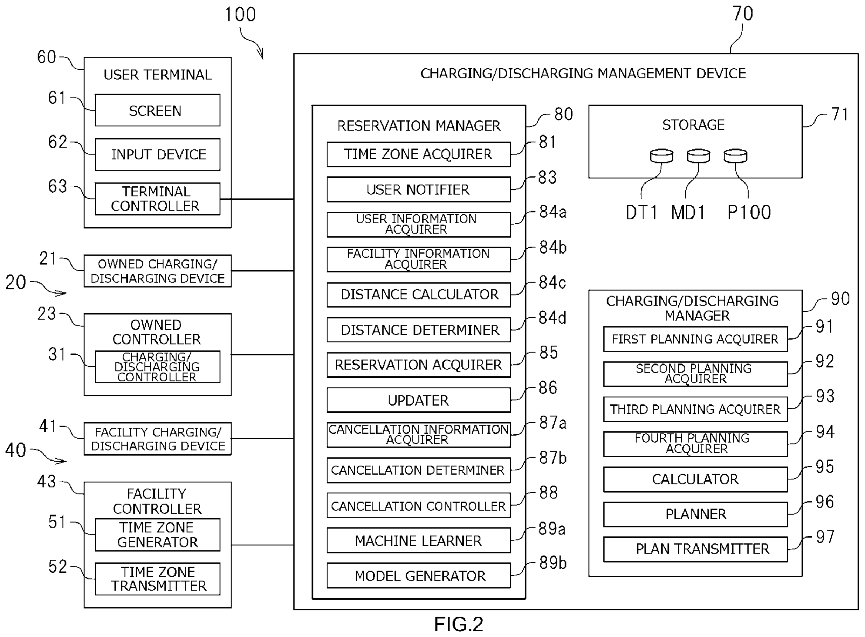

FIG. 2 is a block diagram of the charging/discharging management system 100 according to this preferred embodiment. As illustrated in FIG. 2, the user terminal 60 includes a screen 61, an input device 62 for input by user's operation, such as a touch panel, a keyboard, or a mouse, and a terminal controller 63. The terminal controller 63 is communicably connected to the screen 61 and the input device 62.

The charging/discharging management device 70 illustrated in FIG. 1 is a device that manages charging and discharging of the vehicle 10. The charging/discharging management device 70 is a device that manages charging and discharging of the owned charging/discharging device 21 in the owned facility 5 and charging and discharging of the facility charging/discharging device 41 in the charging/discharging facility 6. For example, in a case where the charging/discharging management system 100 is implemented by a client server system, the charging/discharging management device 70 functions as a server. The charging/discharging management device 70 is implemented by, for example, a microcomputer included in a server. The charging/discharging management device 70 includes, for example, an I/F, a CPU, a ROM, and a RAM. The charging/discharging management device 70 may be constituted by a single computer (e.g., a single server) or a plurality of computers (e.g., a plurality of servers).

In this preferred embodiment, as illustrated in FIG. 2, the charging/discharging management device 70 is communicably connected to the owned charging/discharging device 21 and the owned controller 23 in each owned facility 5, the facility charging/discharging device 41 and the facility controller 43 in each charging/discharging facility 6, and the user terminal 60 (specifically, the terminal controller 63). In this example, the charging/discharging management device 70 may be connected to the owned charging/discharging device 21 and the owned controller 23 in each owned facility 5, the facility charging/discharging device 41 and the facility controller 43 in each charging/discharging facility 6, and the user terminal 60 via the Internet. Although not shown, the charging/discharging management device 70 may be communicably connected to the owned power storage device 22 and the facility power storage device 42.

In the charging/discharging facility 6, it is preferable to use a larger number of facility charging/discharging devices 41. As described above, each facility charging/discharging device 41 charges the vehicle 10 using purchased electric power or renewable energy power stored in the facility power storage device 42. In the charging/discharging facility 6, renewable electric power can be obtained at a lower cost than purchased electric power, and thus, it is desirable to charge the vehicle 10 using renewable electric power rather than purchased electric power. However, the amount of renewable energy power is not constant and varies in accordance with the date and the time zone. For example, in a case where renewable energy power is solar power generated by a solar power generation device, which is an example of the facility renewable energy power generation device 44, a larger amount of solar power can be obtained on sunny days, but a large amount of solar power is less likely to be obtained on rainy days. For example, when the amount of renewable energy power is large, it is preferable to consume renewable energy power using the facility charging/discharging device 41, and thus, the amount of discharging of the facility charging/discharging device 41 is preferably large. On the other hand, when the amount of renewable energy power is small, a large amount of purchased electric power is used, and thus, the amount of discharging of the facility charging/discharging apparatus 41 is preferably small.

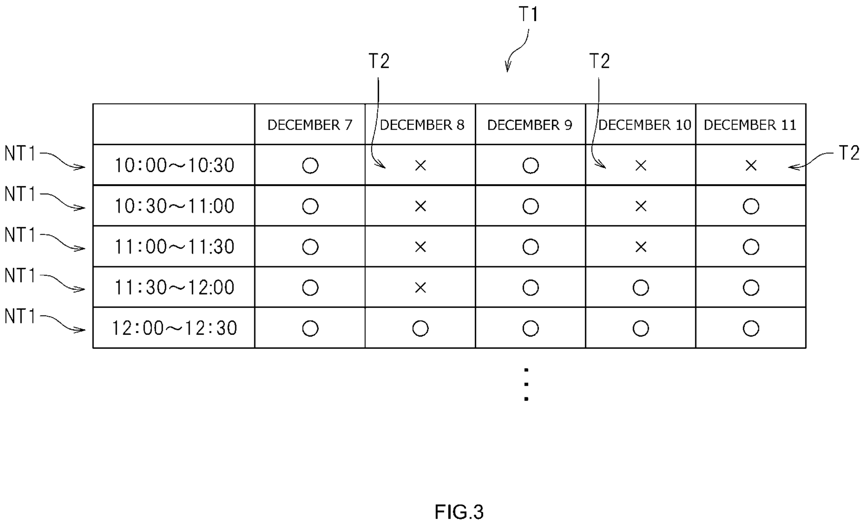

In this manner, in the charging/discharging facility 6, there are time zones in which it is desirable to increase the discharging amount of the facility charging/discharging device 41 and time zones in which it is desirable to reduce the discharging amount of the facility charging/discharging device 41. The discharging of the facility charging/discharging device 41 herein refers to consumption of electric power stored in the facility power storage device 42, and from the viewpoint of the vehicle 10, can be charging of the vehicle 10. FIG. 3 is a table showing an example of a discharging recommendation time zone T1. In this preferred embodiment, the time zone in which it is desirable to increase the discharge amount of the facility charging/discharging device 41 in the charging/discharging facility 6 will be referred to as the discharging recommendation time zone T1 (see FIG. 3). In this preferred embodiment, the discharging recommendation time zone T1 refers to a time zone in which it is desirable to charge the vehicle 10 with energy-efficient electric power using the facility power storage device 42. For example, energy-efficient electric power may be sold to an electric power company. However, an electric power company may have time zones in which purchasing of electric power is stopped when the amount of stored electric power increases. The discharging recommendation time zone T1 may include a time zone in which energy-efficient electric power cannot be sold to the electric power company.

In this preferred embodiment, to charge the vehicle 10 more efficiently in the discharging recommendation time zone T1, the user makes a reservation beforehand for a time zone in which the vehicle 10 is charged in the discharging recommendation time zone T1. The time zone for which the user makes a reservation to charge in the recommended discharging time zone T1 herein will be referred to as a reservation time zone T2. By filling the discharging recommendation time zone T1 more with the reservation time zone T2, electric power can be efficiently consumed in the discharging recommendation time zone T1. In FIG. 3, the reservation time zone T2 is indicated by an "X."

In this preferred embodiment, the charging/discharging management system 100 manages a reservation for charging the vehicle 10 in the discharging recommendation time zone T1. For this purpose, as illustrated in FIG. 2, the charging/discharging management device 70 includes a storage 71 and a reservation manager 80. The reservation manager 80 may be implemented by software or may be implemented by hardware, for example. The reservation manager 80 may be implemented by one or more processors or may be implemented by circuitry.

The reservation manager 80 is configured or programmed to manage a reservation for charging the vehicle 10 in the discharging recommendation time zone T1. In this preferred embodiment, as illustrated in FIG. 2, the reservation manager 80 includes a time zone acquirer 81, a user notifier 83, a user information acquirer 84a, a facility information acquirer 84b, a distance calculator 84c, a distance determiner 84d, a reservation acquirer 85, an updater 86, a cancellation information acquirer 87a, a cancellation determiner 87b, a cancellation controller 88, a machine learner 89a, and a model generator 89b. The facility controller 43 includes a time zone generator 51 and a time zone transmitter 52.

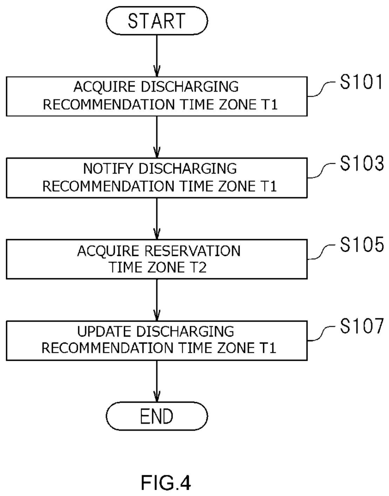

Next, a procedure of managing a reservation for charging the vehicle 10 in the discharging recommendation time zone T1 will be described with reference to the flowchart of FIG. 4.

First, in step S101 in FIG. 4, the time zone acquirer 81 in FIG. 2 acquires the discharging recommendation time zone T1. The time zone acquirer 81 herein acquires the discharging recommendation time zone T1 that is a time zone in which the facility charging/discharging device 41 in the charging/discharging facility 6 recommends discharging. The discharging recommendation time zone T1 is different for each charging/discharging facility 6. Thus, the time zone acquirer 81 acquires the discharging recommendation time zone T1 for each charging/discharging facility 6. An acquisition destination for which the time zone acquirer 81 acquires the discharging recommendation time zone T1 is not particularly limited. In this preferred embodiment, the discharging recommendation time zone T1 is created by the facility controller 43 in the charging/discharging facility 6. Thus, the time zone acquirer 81 acquires the discharging recommendation time zone T1 from the facility controller 43.

In the facility controller 43, the time zone generator 51 in FIG. 2 generates the discharging recommendation time zone T1 for the charging/discharging facility 6. As shown in FIG. 3, the discharging recommendation time zone T1 is divided at, for example, reference intervals NT1 for each day. The reference intervals NT1 herein are time zones that a user can reserve. A specific time of each reference interval NT1 is not particularly limited. In this example, the reference interval NT1 is 30 minutes. In this example, the discharging recommendation time zone T1 may be generated in accordance with the amount of renewable energy power that can be generated at each reference interval NT1. In this preferred embodiment, the time zone generator 51 generates the discharging recommendation time zone T1 by setting a time zone in which the renewable energy power amount in the reference interval NT1 is greater than or equal to a predetermined reference amount, as the discharging recommendation time zone T1, for example.

In generating the discharging recommendation time zone T1, it may be necessary to estimate the renewable energy power amount at each reference interval NT1. In this preferred embodiment, the renewable energy power is solar power. The amount of solar power can vary depending on weather. In view of this, the time zone generator 51 estimates a renewable energy power amount based on weather information (e.g., weather information including hourly sunlight strength) provided by a weather information provider. For example, it is estimated that the renewable energy power amount in a time zone corresponding to weather information indicating sunny weather is greater than the predetermined reference amount. The renewable energy power amount for a time zone corresponding to weather information indicating rainy weather is estimated to be less than the reference amount. The renewable energy power amount for a time zone corresponding to weather information indicating cloudy weather is estimated as the reference amount. The time zone generator 51 generates the discharging recommendation time zone T1 based on the renewable energy power amount estimated for each time as described above.

In this preferred embodiment, the discharging recommendation time zone T1 generated by the time zone generator 51 is transmitted by the time zone transmitter 52 of the facility controller 43 (see FIG. 2). The time zone transmitter 52 transmits the discharging recommendation time zone T1 to the charging/discharging management device 70. The time zone acquirer 81 acquires the discharging recommendation time zone T1 by receiving the discharging recommendation time zone T1 transmitted by the time zone transmitter 52. The discharging recommendation time zone T1 acquired by the time zone acquirer 81 is stored in the storage 71 in FIG. 2.

After the discharging recommendation time zone T1 has been acquired in this manner, step S103 in FIG. 4 is executed. In step S103, the user notifier 83 in FIG. 2 notifies a user using the vehicle 10 of the discharging recommendation time zone T1. A notification destination for which the user notifier 83 notifies of the discharging recommendation time zone T1 is not particularly limited. In this preferred embodiment, the user notifier 83 notifies the user by transmitting the discharging recommendation time zone T1 to the user terminal 60. The terminal controller 63 of the user terminal 60 receives the discharging recommendation time zone T1 transmitted from the user notifier 83.

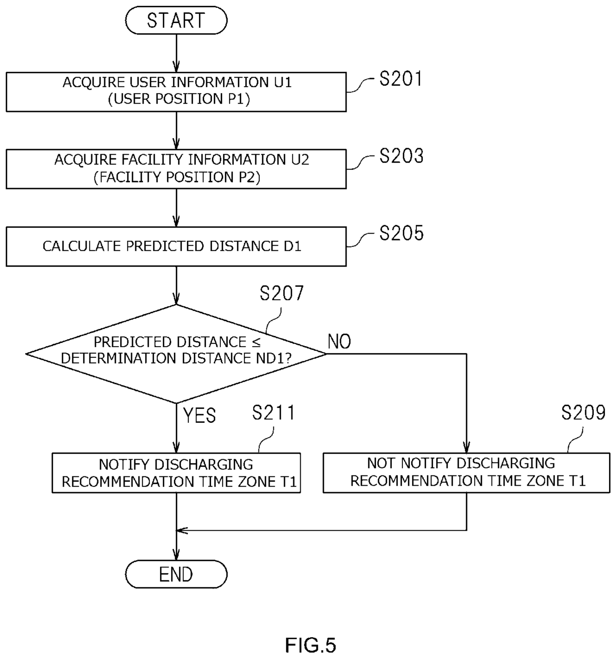

As described above, the discharging recommendation time zone T1 may be present in each charging/discharging facility 6. For some users, there is a charging/discharging facility 6 that is far from the owned facility 5. There is also a charging/discharging facility 6 that is far from the current position of the vehicle 10 used by the user. In view of this, a user of the owned facility 5 located far from the charging/discharging facility 6 or a user using the vehicle 10 located far from the charging/discharging facility 6 is not notified of the discharging recommendation time zone T1 of this charging/discharging facility 6. Next, a procedure of determining whether to issue a notification of the discharging recommendation time zone T1 will be described with reference to the flowchart of FIG. 5.

First, in step S201 in FIG. 5, the user information acquirer 84a in FIG. 2 acquires user information U1. The user information U1 is information concerning a user who owns the owned facility 5. The user information U1 herein includes a user position P1. The user position P1 is position information on the user, and information previously registered by the user. The user position P1 is a current position of the vehicle 10 used by the user, for example. For example, a global positioning system (GPS) is mounted on the vehicle 10. Thus, the user position P1, which is the current position of the vehicle 10, is uniquely identified by the GPS. However, the user position P1 is not limited to the current position of the vehicle 10. For example, the user position P1 may be a location of the owned facility 5 (i.e., an address of the owned facility 5). In this preferred embodiment, the user information U1 including the user position P1 is stored in the user terminal 60. Thus, the user information acquirer 84a acquires the user information U1 from the user terminal 60. A storage destination of the user information U1 including the user position P1 is not particularly limited and may be, for example, the owned controller 23 of the owned facility 5. In this case, the user information acquirer 84a acquires the user information U1 from the owned controller 23. The user information U1 may be acquired from the vehicle 10.

Thereafter, in step S203 in FIG. 5, the facility information acquirer 84b in FIG. 2 acquires facility information U2 of the charging/discharging facility 6. The facility information U2 is information concerning the charging/discharging facility 6. The facility information U2 herein includes a facility position P2. The facility position P2 is a location of the charging/discharging facility 6 (i.e., an address of the charging/discharging facility 6). In other words, the facility position P2 is a position of the facility charging/discharging device 41 in the charging/discharging facility 6. In this preferred embodiment, the facility information U2 including the facility position P2 is stored in the facility controller 43. Thus, the facility information acquirer 84b acquires the facility information U2 from the facility controller 43. However, a storage destination of the facility information U2 is not limited to the facility controller 43. The facility information U2 may be stored in the storage 71 beforehand, for example. In this case, the facility information acquirer 84b acquires the facility information U2 stored in the storage 71.

After the user information U1 and the facility information U2 have been acquired as described above, in step S205 in FIG. 5, the distance calculator 84c in FIG. 2 calculates a predicted distance D1. The predicted distance D1 is a distance from the user position P1 to the facility position P2. The predicted distance D1 may be, for example, a distance in which the vehicle 10 may travel from the user position P1 to the facility position P2. The predicted distance D1 may be a linear distance from the user position P1 to the facility position P2, or may be a minimum distance along a road. Then, in step S207 in FIG. 5, the distance determiner 84d in FIG. 2 determines whether the predicted distance D1 is less than or equal to the predetermined determination distance ND1. The determination distance ND1 is stored in the storage 71 beforehand. Here, if the distance determiner 84d determines that the predicted distance D1 is longer than the determined distance ND1, it is determined that the distance to the charging/discharging facility 6 is long. In this case, the process proceeds to step S209 in FIG. 5. In step S209, it is determined not to notify the corresponding user of the discharging recommendation time zone T1 concerning the charging/discharging facility 6.

On the other hand, if the distance determiner 84d determines that the predicted distance D1 is less than or equal to the determined distance ND1 in step S207, it is determined that the distance to the charging/discharging facility 6 is short. In this case, the process proceeds to step S211 in FIG. 5. In step S211, the user notifier 83 notifies the corresponding user of the discharging recommendation time zone T1 concerning the charging/discharging facility 6.

Moreover, for each charging/discharging facility 6, a unit charging price per unit charging amount in charging the vehicle 10 in the discharging recommendation time zone T1 is set beforehand. Thus, the user notifier 83 may notify the user of the unit charging price together with the discharging recommendation time zone T1. In addition, the charging/discharging management device 70 may have acquired information concerning a renewable energy power amount power for every hour in each owned facilities 5 and a unit price of purchased electric power for the owned facilities 5 beforehand. In this case, the charging/discharging management device 70 can estimate a charging amount paid when charging the vehicle 10 in the owned facility 5 (e.g., the amount of purchased electric power required during charging × unit price of purchased electric power) and a charging amount to be paid when charging the vehicle 10 in the charging/discharging facility 6 (e.g., charging amount × charging unit price). If the charging amount in the charging/discharging facility 6 is more reasonable than that in the owned facility 5, the user notifier 83 may notify the user that charging the vehicle 10 in the charging/discharging facility 6 will result in a lower charging amount together with the discharging recommendation time zone T1. This can encourage the user to make a reservation.

In this manner, after notifying the user of the discharging recommendation time zone T1 in step S103 in FIG. 4, step S105 in FIG. 4 is executed. In step S105, the reservation acquirer 85 in FIG. 2 acquires the reservation time zone T2. The reservation time zone T2 is a time zone selected by the user from the discharging recommendation time zone T1 notified by the user notifier 83, and is a time zone for charging the vehicle 10 in the charging/discharging facility 6. In this preferred embodiment, the discharging recommendation time zone T1 (see FIG. 3) of the charging/discharging facility 6 the user can reserve is transmitted to the user terminal 60. The user selects a time zone to charge the vehicle 10 from the notified discharging recommendation time zone T1 in the charging/discharging facility 6 as the reservation time zone T2. Then, the user manipulates the input device 62 of the user terminal 60, for example, to transmit the reservation time zone T2 from the user terminal 60 to the charging/discharging management device 70. The reservation acquirer 85 acquires the reservation time zone T2 by receiving the reservation time zone T2 transmitted from the user terminal 60.

Then, in step S107 in FIG. 4, the updater 86 in FIG. 2 updates the discharging recommendation time zone T1. The updater 86 herein updates the discharging recommendation time zone T1 to prevent other users from making a reservation for charging in the reservation time zone T2 acquired by the reservation acquirer 85. The method for updating the discharging recommendation time zone T1 is not particularly limited. For example, the updater 86 may update the discharging recommendation time zone T1 by removing the reservation time zone T2 from the discharging recommendation time zone T1. For example, the update section 86 may update the discharging recommendation time zone T1 by marking the reservation time zone T2 with a predetermined marker to prevent other users from making reservations in the reservation time zone T2. The discharging recommendation time zone T1 updated by the updater 86 is stored in the storage 71.

After the discharging recommendation time zone T1 has been updated as described above, in a case where the user notifier 83 notifies the user of the discharging recommendation time zone T1, the discharging recommendation time zone T1 updated by the updater 86 will be notified to the user. In this manner, the reservation manager 80 of the charging/discharging management device 70 can manage the discharging recommendation time zone T1 for each charging/discharging facility 6.

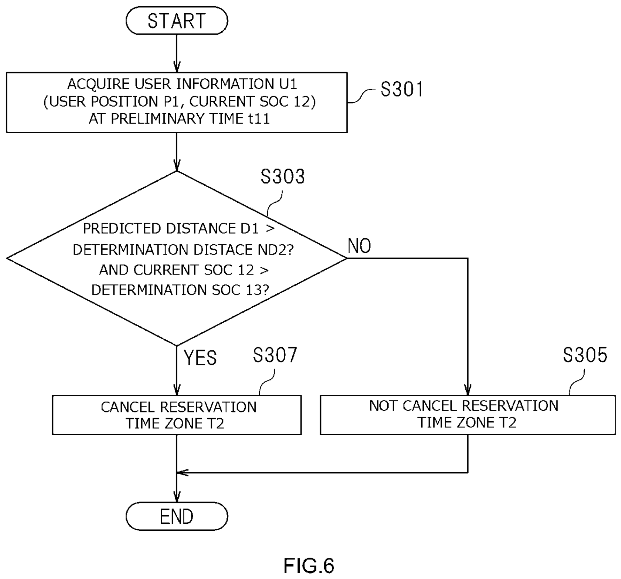

Even in a case where the user makes a reservation for charging from the discharging recommendation time zone T1 as described above, the vehicle 10 used by the user might not arrive at the charging/discharging facility 6 by the reservation time zone T2. In this case, there may be a high possibility that the vehicle 10 is not charged in the reservation time zone T2 in the charging/discharging facility 6. In view of this, in this preferred embodiment, the reservation manager 80 of the charging/discharging management device 70 has the function of canceling the reservation time zone T2, that is, canceling the reservation for charging the vehicle 10 by the user. A procedure of canceling a reservation for charging the vehicle 10 will now be described with reference to the flowchart of FIG. 6.

In step S301, the cancellation information acquirer 87a in FIG. 2 acquires the user information U1. In this example, at a preliminary time t11 that is a time before a start time of the reservation time zone T2 by a predetermined preliminary period, the user information U1 of the user who made a reservation for charging in the reservation time zone T2 is acquired. As described above, the user information U1 includes the user position P1 that is the current position of the vehicle 10. The user position P1 acquired by the cancellation information acquirer 87a is preferably the current position of the vehicle 10. The user information U1 herein includes a current SOC 12 of the vehicle 10. The current SOC 12 refers to a current state of charge (SOC, charged state) of the secondary battery 11 mounted on the vehicle 10. The SOC is an index indicating a battery capacity when a fully charged state of the secondary battery 11 is 100% and a fully discharged state is 0%. The SOC herein may be replaced with a remaining battery level. The user information U1 may be stored in the user terminal 60 as described above, in the owned controller 23, or in the vehicle 10. In this example, the cancellation information acquirer 87a acquires the user position P1 and the current SOC 12 as the user information U1 from at least one of the user terminal 60, the owned controller 23, and the vehicle 10.

Then, in step S303 in FIG. 6, the cancellation determiner 87b in FIG. 2 determines whether to cancel the reservation time zone T2 or not. Canceling the reservation time zone T2 herein means allowing other users to reserve the reservation time zone T2. In this example, the cancellation determiner 87b determines whether to cancel the reservation time zone T2 based on the user position P1 and the current SOC 12. The cancellation determiner 87b determines whether the current SOC 12 is greater than a predetermined determination SOC 13 or not. The determination SOC 13 is a numerical value serving as a reference to determine whether the SOC of vehicle 10 is large and whether the secondary battery 11 is sufficiently charged. The determination SOC 13 is stored in the storage 71 beforehand.

The cancellation determiner 87b determines whether the predicted distance D1 from the user position P1 acquired by the cancellation information acquirer 87a to the facility position P2 is longer than a predetermined cancellation determination distance ND2 or not. In this example, the facility position P2 is included in the facility information U2 as described above. The facility information U2 has already been acquired by the facility information acquirer 84b in FIG. 2. The predicted distance D1 is calculated by the distance calculator 84c in FIG. 2. The cancellation determination distance ND2 is a numerical value serving as a reference to determine whether the distance from the current place of the vehicle 10 to the charging/discharging facility 6 is long and whether the vehicle 10 has the possibility of traveling to the charging/discharging facility 6. The cancellation determination distance ND2 is stored in the storage 71 beforehand.

In this preferred embodiment, if the cancellation determiner 87b determines that the current SOC 12 is less than or equal to the determination SOC 13, it is estimated that the SOC of the secondary battery 11 mounted on the vehicle 10 is small, and there is a possibility that the vehicle 10 is charged. If the cancellation determiner 87b determines that the predicted distance D1 is less than or equal to the cancellation determination distance ND2, it is estimated that the vehicle 10 is in a place close to the charging/discharging facility 6 and has the possibility of arriving at the charging/discharging facility 6 by the reservation time zone T2. Therefore, in step S303 in FIG. 6, if the cancellation determiner 87b determines that the current SOC 12 is less than or equal to the determination SOC 13, or that the predicted distance D1 is less than or equal to the cancellation determination distance ND2, it is determined not to cancel the reservation time zone T2. In this case, the process proceeds to step S305 in FIG. 6. In step S305, it is determined not to cancel the reservation time zone T2.

On the other hand, in step S303, if the cancellation determiner 87b determines that the current SOC 12 is greater than the determination SOC 13, it is estimated that the secondary battery 11 mounted on the vehicle 10 is in a charged state, and thus, the possibility that the vehicle 10 is to be charged at this time is low. If the cancellation determiner 87b determines that the predicted distance D1 is longer than the cancellation determination distance ND2, it is estimated that the vehicle 10 is far from the charging/discharging facility 6 and has a low possibility of arriving at the charging/discharging facility 6 by the reservation time zone T2. Therefore, in step S303, if the cancellation determiner 87b determines that the current SOC 12 is greater than the determination SOC 13 and that the predicted distance D1 is longer than the cancellation determination distance ND2, it is determined to cancel the reservation time zone T2. In this case, the process proceeds to step S307 in FIG. 6.

In step S307, the cancellation controller 88 in FIG. 6 cancels the reservation time zone T2 in the discharging recommendation time zone T1. The cancellation controller 88 updates the discharging recommendation time zone T1 so that a reservation for charging is possible with respect to the corresponding reservation time zone T2. The discharging recommendation time zone T1 for which the reservation time zone T2 has been canceled by the cancellation controller 88 is stored in the storage 71. After the discharging recommendation time zone T1 has been updated as described above, in a case where the user notifier 83 in FIG. 2 notifies the user of the discharging recommendation time zone T1, the user is notified of the discharging recommendation time zone T1 after the reservation of the reservation time zone T2 has been canceled by the cancellation controller 88.

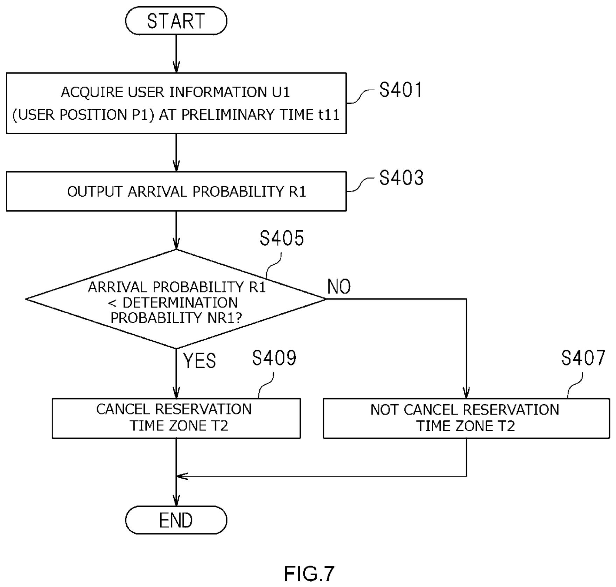

It is also possible to determine whether to cancel the reservation time zone T2 by other methods. Another procedure of canceling a reservation for charging the vehicle 10 will now be described with reference to the flowchart of FIG. 7. In this preferred embodiment, it may be determined whether to cancel the reservation time zone T2 based on an arrival probability R1, for example. The arrival probability R1 herein refers to a probability that the user arrives at the facility location P2 by driving the vehicle 10 before the reservation time zone T2.

First, in step S401 in FIG. 7, the cancellation information acquirer 87a in FIG. 2 acquires the user information U1 including the user position P1 at the preliminary time t11 that is a time before the start time of the reservation time zone T2 by a predetermined preliminary period. The user position P1 acquired in step S401 is preferably the current position of the vehicle 10. The cancellation information acquirer 87a acquires the user position P1 as the user information U1 from at least one of the user terminal 60, the owned controller 23, and the vehicle 10.

Thereafter, in step S403 in FIG. 7, the machine learner 89a in FIG. 2 outputs the arrival probability R1. In this preferred embodiment, the machine learner 89a outputs the arrival probability R1 by machine learning. The machine learning used herein is supervised machine learning. To output the arrival probability R1, the model generator 89b generates the leaning model MD1 (see FIG. 2). In this example, the storage 71 stores the training data DT1, as illustrated in FIG. 2. The training data DT1 is previously collected data on the user position P1 of a user who made a reservation for charging with respect to the charging/discharging facility 6, and on whether the user at the user position P1 has arrived at the charging/discharging facility 6 by the reservation time zone T2 or not. The arrival probability R1 herein is a proportion of arrivals compared to the total of arrivals and non-arrivals at the user position P1.

In this preferred embodiment, the model generator 89b receives, as an input, data in which the user position P1 and the presence or absence of arrival are associated in the training data DT1, and outputs the arrival probability R1 estimated from the data on the user position P1 and the presence or absence of arrival, thereby generating the learning model MD1 through supervised machine learning. The learning model MD1 generated by the model generator 89b is stored in the storage 71. Then, in determining whether to cancel the reservation time zone T2, the machine learner 89a outputs the arrival probability R1 estimated from the user position P1 acquired by the cancellation information acquirer 87a using the learning model MD1. That is, the machine learner 89a inputs the user position P1 acquired by the cancellation information acquirer 87a to the learning model MD1 and outputs the arrival probability R1.

Then, in step S405 in FIG. 7, the cancellation determiner 87b in FIG. 2 determines whether the arrival probability R1 is less than the predetermined determination probability NR1 or not. In this example, if the cancellation determiner 87b determines that the arrival probability R1 is greater than or equal to the determination probability NR1, it is estimated that the user has a high probability of arriving at the reserved charging/discharging facility 6 by the reservation time zone T2. In this case, the process proceeds to step S407 in FIG. 7. In step S407, it is determined not to cancel the reservation time zone T2.

On the other hand, in step S405, if the cancellation determiner 87b determines that the arrival probability R1 is less than the determination probability NR1, it is estimated that the user has a low probability of arriving at the reserved charging/discharging facility 6 by the reservation time zone T2. In this case, the process proceeds to step S409 in FIG. 7. In step S409, the cancellation controller 88 cancels the reservation time zone T2 in the discharging recommendation time zone T1. This makes it possible to make a reservation for charging with respect to the canceled reservation time zone T2.

In a case where a user who owns the owned facility 5 makes a reservation for charging in the discharging recommendation time zone T1, the user drives the vehicle 10 to arrive at the charging/discharging facility 6 by the reservation time zone T2. Charging the vehicle 10 in the discharging recommendation time zone T1 results in a lower charging cost per unit charging amount. Thus, it is preferable for the user to charge the vehicle 10 with a larger amount of power using the facility charging/discharging device 41 in the reserved charging/discharging facility 6.

In view of this, in this preferred embodiment, the charging/discharging management device 70 manages the remaining battery level of the vehicle 10 so that the vehicle 10 is charged with a larger amount of power in charging the vehicle 10 in the reservation time zone T2 in the charging/discharging facility 6. The remaining battery level of the vehicle 10 herein refers to a remaining battery level of the secondary battery 11 mounted on the vehicle 10. In this preferred embodiment, as illustrated in FIG. 2, the charging/discharging management device 70 includes a charging/discharging manager 90. The charging/discharging manager 90 may be implemented by software or may be implemented by hardware, for example. The charging/discharging manager 90 may be implemented by one or more processors or may be implemented by circuitry.

The charging/discharging manager 90 is configured or programmed to manage charging and discharging of the vehicle 10 in the owned facility 5 so that the vehicle 10 can be charged with a larger amount of power in charging the vehicle 10 in the reservation time zone T2 in the charging/discharging facility 6. In this example, the charging/discharging manager 90 makes a charging/discharging plan P100 (see FIG. 2) as a plan for charging and discharging the vehicle 10 in the owned facility 5 (e.g., the owned charging/discharging device 21) and transmits the charging/discharging plan P100 to the owned controller 23. The owned controller 23 controls charging and discharging of the owned charging/discharging device 21 to which the vehicle 10 is connected, in accordance with the charging/discharging plan P100. In this preferred embodiment, as illustrated in FIG. 2, the charging/discharging manager 90 includes a first planning acquirer 91, a second planning acquirer 92, a third planning acquirer 93, a fourth planning acquirer 94, a calculator 95, a planner 96, and a plan transmitter 97.

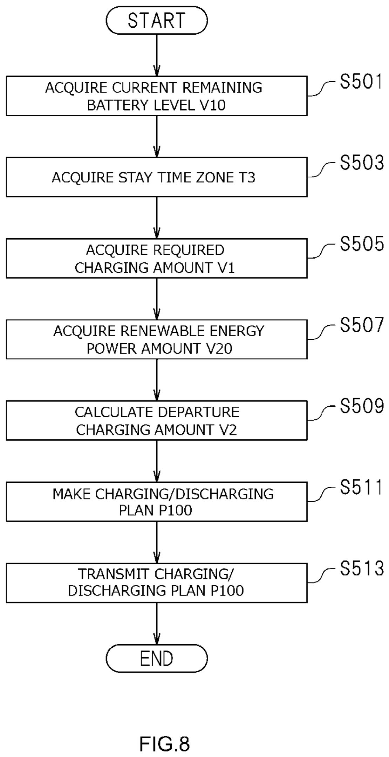

Next, a procedure of making the charging/discharging plan P100 will be described with reference to the flowchart of FIG. 8. In this preferred embodiment, it is assumed that the user is staying in the owned facility 5 before the reservation time zone T2. A time zone in which the user stays in the owned facility 5 will be referred to as a stay time zone T3. The point of time at the end of the stay time zone T3 will be referred to as a departure time. In this example, in the stay time zone T3, the vehicle 10 used by the user is connected to the owned charging/discharging device 21 and is in a chargeable/dischargeable state.

As illustrated in FIG. 1, the position of the owned facility 5 herein is referred to as an owned-facility position P3. A charging amount consumed by the secondary battery 11 mounted on the vehicle 10 when the vehicle 10 travels from the owned-facility position P3 to the facility position P2 will be referred to as a required charging amount V1. In this example, the charging/discharging manager 90 makes the charging/discharging plan P100 such that at the departure time, the remaining battery level of the vehicle 10 approaches the departure charging amount V2 in which the required charging amount V1 is taken into account.

First, in step S501 in FIG. 8, the first plan acquirer 91 in FIG. 2 acquires a current remaining battery level V10. The current remaining battery level V10 refers to the current remaining battery level of the secondary battery 11 mounted on the vehicle 10. For example, the current remaining battery level V10 is stored in the vehicle 10. For example, the first planning acquirer 91 acquires the current remaining battery level V10 from the vehicle 10. The current remaining battery level V10 may be stored in the user terminal 60. In this case, the first planning acquirer 91 may acquire the current remaining battery level V10 from the user terminal 60. The current remaining battery level V10 may also be an estimate. For example, the storage 71 of the charging/discharging management device 70 stores past traveling data of the vehicle 10, and based on the traveling data of the vehicle 10, the current remaining battery level V10 may be estimated. The first planning acquirer 91 may acquire the currently remaining battery level V10 estimated based on the traveling data.

Then, in step S503 in FIG. 8, the second planning acquirer 92 in FIG. 2 acquires the stay time zone T3 that is the time zone in which the user stays in the owned facility 5. The stay time zone T3 is information input by the user using the user terminal 60, for example, and is stored in the user terminal 60. Thus, the second planning acquirer 92 acquires the stay time zone T3 from the user terminal 60. The stay time zone T3 may also be an estimate. For example, the storage 71 of the charging/discharging management device 70 stores a past stay time zone T3 for each user. Based on the past stay time zone T3, for example, a time zone in which the user is likely to stay in the owned facility 5 on each day of the week can be estimated. Therefore, the stay time zone T3 may be estimated based on the past stay time zone T3. In this case, the second planning acquirer 92 may acquire the stay time zone T3 estimated based on the past stay time zone T3.

Thereafter, in step S505 in FIG. 8, the third planning acquirer 93 in FIG. 2 acquires the required charging amount V1. As described above, the required charging amount V1 is the charging amount necessary for the vehicle 10 to travel from the owned-facility position P3 to the facility position P2 of the charging/discharging facility 6 for which the reservation time zone T2 has been reserved. In this example, a unit consumption amount that is the amount of electric power consumed per unit distance when vehicle 10 travels is set beforehand. Thus, an owned facility distance that is a distance from the owned-facility position P3 to the facility position P2 is calculated, and based on the owned facility distance and the unit consumption amount, the required charging amount V1 is estimated by, for example, multiplying the owned facility distance by the unit consumption amount. The third planning acquirer 93 acquires the required charging amount V1 estimated from the owned facility distance and the unit consumption amount.

Subsequently, in step S507 in FIG. 8, the fourth planning acquirer 94 in FIG. 2 acquires a renewable energy power amount V20 for each specified time in the owned facility 5. The renewable energy power amount V20 is the amount of renewable energy power generated by the owned renewable energy power generation device 24. In this preferred embodiment, the renewable energy power amount V20 can be a solar power generation amount. Thus, the renewable energy power amount V20 can be estimated based on the weather. In view of this, the renewable energy power amount V20 may be estimated at every predetermined time based on weather information provided by a weather information provider that provides weather information, for example. The fourth planning acquirer 94 acquires the renewable energy power amount V20 for each predetermined time estimated based on the weather information.

Then, in step S509 in FIG. 8, the calculator 95 in FIG. 2 calculates the departure charging amount V2. The departure charging amount V2 refers to a remaining battery level of the vehicle 10 when departing toward the charging/discharging facility 6 for which the reservation time zone T2 has been reserved. The departure charging amount V2 is set based on the required charging amount V1. For example, the calculator 95 sets an amount obtained by adding a margin amount to the required charging amount V1, as the departure charging amount V2. In this preferred embodiment, the departure charging amount V2 is greater than the required charging amount V1.

Thereafter, in step S511 in FIG. 8, the planner 96 in FIG. 2 makes the charging/discharging plan P100. The planner 96 herein makes the charging/discharging plan P100 for the vehicle 10 so that at the departure time, which is the end point of the stay time zone T3, the remaining battery level of the vehicle 10 connected to the owned charging/discharging device 21 approaches the departure charging amount V2. The expression "the current remaining battery level V10 approaches the departure charging amount V2" herein means that the remaining battery level of the vehicle 10 at the departure time is close to the departure charging amount V2 among charging amounts greater than or equal to the departure charging amount V2. Therefore, the remaining battery level of the vehicle 10 at the departure time may be equal to the departure charging amount V2 or slightly larger than the departure charging amount V2 (e.g., may be a charging amount of V2 + α). The charging/discharging plan P100 includes plans for discharging and charging.

The planner 96 herein can make the charging/discharging plan P100 in consideration of the renewable energy power amount V20 for each predetermined time. As described above, since renewable electric power is more reasonable than purchased electric power, electric power consumed in the owned facility 5 is preferably covered using the renewable electric power amount V20. Electric power discharged from the vehicle 10 can also be consumed in the owned facility 5. Therefore, the planner 96 may make the charging/discharging plan P100 for the vehicle 10 while optimizing consumption of electric power in the owned facility 5 such that consumption of the renewable energy power amount V20 is maximum, in other words, consumption of purchased electric power is minimum. For example, the charging/discharging plan P100 may be made such that in a time zone in which the renewable energy power amount V20 is relatively small and the probability of using purchased electric power is high, discharging is performed with respect to the vehicle 10 and electric power discharged from the vehicle 10 is consumed in the owned facility 5. In this manner, the technique for optimizing the charging/discharging plan P100 such that consumption of purchased electric power in the owned facility 5 is minimized is not particularly limited. Examples of this optimization technique include linear programming methods such as mixed-integer linear programming (MILP) and nonlinear programming.

After the charging/discharging plan P100 has been made by the planner 96 as described above, the process proceeds to step S513 in FIG. 8. In step S513, the plan transmitter 97 in FIG. 2 transmits the charging/discharging plan P100 to the owned controller 23.

The owned controller 23 receives the charging/discharging plan P100. In this preferred embodiment, as illustrated in FIG. 2, the owned controller 23 includes a charging/discharging controller 31. After the owned controller 23 has received the charging/discharging plan P100, the charging/discharging controller 31 of the owned controller 23 controls charging and discharging of the owned charging/discharging device 21 based on the charging/discharging plan P100, thereby controlling charging and discharging of the vehicle 10 connected to the owned charging/discharging device 21. For example, the charging/discharging plan P100 is in a format that can be analyzed by the owned controller 23. The charging/discharging controller 31 controls the owned charging/discharging device 21 to discharge electric power from the vehicle 10 in a time zone in which the vehicle 10 is discharged in the stay time zone T3 and to charge the vehicle 10 in a time zone in which the vehicle 10 is charged, in accordance with the charging/discharging plan P100. In this manner, by charging and discharging the vehicle 10 in accordance with the charging/discharging plan P100, the remaining battery level of the vehicle 10 can be made closer to the departure charging amount V2 at the departure time at the end point of the stay time zone T3.

At the departure time after the stay time zone T3, the user drives the vehicle 10 and heads toward the reserved charging/discharging facility 6. At this time, the remaining battery level of vehicle 10 is consumed. Then, the user arrives at the charging/discharging facility 6, and connects the vehicle 10 to the facility charging/discharging device 41. When the reservation time zone T2 arrives, charging from the facility charging/discharging device 41 to the vehicle 10 starts. When the reservation time zone T2 has passed, charging of the vehicle 10 is completed.

In this preferred embodiment, as illustrated in FIG. 1, the charging/discharging management system 100 includes the charging/discharging management device 70, the owned charging/discharging device 21, the owned controller 23 that controls the owned charging/discharging device 21, the facility charging/discharging device 41, and the facility controller 43 that controls the facility charging/discharging device 41. As illustrated in FIG. 2, the charging/discharging management device 70 includes the reservation manager 80 and the charging/discharging manager 90. The reservation manager 80 includes the time zone acquirer 81, the user notifier 83, the reservation acquirer 85, and the updater 86. In step S101 in FIG. 4, the time zone acquirer 81 acquires the discharging recommendation time zone T1 that is a time zone in which the facility charging/discharging device 41 in the charging/discharging facility 6 recommends discharging. In step S103 in FIG. 4, the user notifier 83 notifies the user using the vehicle 10 including the secondary battery 11 as a driving source, of the discharging recommendation time zone T1. In step S105 in FIG. 4, the reservation acquirer 85 acquires the reservation time zone T2 in which the facility charging/discharging device 41 is used in the discharging recommendation time zone T1, from the user notified by the user notifier 83. In step S107 in FIG. 4, the updater 86 updates the discharging recommendation time zone T1 to prevent other users from making a reservation for using the facility charging/discharging device 41 in the reservation time zone T2. In this manner, the user makes a reservation beforehand for the reservation time zone T2 in which the user wants to charge the vehicle 10 from the discharging recommendation time zone T1 in which the user wants to actively discharge in the charging/discharging device 41. This enables the vehicle 10 to be efficiently charged in the recommended electric discharge time zone T1.

In this preferred embodiment, as illustrated in FIG. 2, the charging/discharging manager 90 includes the first planning acquirer 91, the second planning acquirer 92, the third planning acquirer 93, and the planner 96. In step S501 in FIG. 8, the first planning acquirer 91 acquires the current remaining battery level V10 that is the current remaining level of the secondary battery 11 in the vehicle 10. In step S503 in FIG. 8, the second planning acquirer 92 acquires the stay time zone T3 that is the time zone in which the user stays in the owned facility 5 owned by the user. In step S505 in FIG. 8, the third planning acquirer 93 acquires the required charging amount V1 that is the charging amount required for the vehicle 10 traveling from the owned facility position P3 that is the position of the owned facility 5 to the facility position P2 that is the position of the charging/discharging facility 6. In step S511 in FIG. 8, the planner 96 makes the charging/discharging plan P100 for charging and discharging the vehicle 10 by the owned charging/discharging device 21 in the owned facility 5 such that the remaining battery level of the secondary battery 11 in the vehicle 10 approaches the departure charging amount V2 set based on the required charging amount V1 from the current remaining battery level V10 by the departure time at the end of the stay time zone T3. This makes it possible to make the charging/discharging plan P100 for charging and discharging that ensures the remaining battery level of the vehicle 10 to approach the departure charging amount V2 based on the required charging amount V1 required for the vehicle 10 traveling from the owned facility 5 to the charging/discharging facility 6, with respect to a user who has reserved the reservation time zone T2. Accordingly, the owned charging/discharging device 21 in the owned facility 5 charges and discharges the vehicle 10 in accordance with the charging/discharging plan P100 so that the remaining battery level of the vehicle 10 can be brought close to the departure charging amount V2 at the departure time. As a result, while driving the vehicle 10 from the owned facility 5 to the charging/discharging facility 6, it is possible to supply a larger amount of power to the vehicle 10 in the charging/discharging facility 6.

In this preferred embodiment, the plan transmitter 97 included in the charging/discharging manager 90 transmits the charging/discharging plan P100 made by the planner 96 to the owned controller 23, as shown in step S513 in FIG. 8. The charging/discharging controller 31 of the owned controller 23 controls the owned charging/discharging device 21 in accordance with the charging/discharging plan P100, thereby controlling charging and discharging of the vehicle 10 connected to the owned charging/discharging device 21 so that the remaining battery level of the vehicle 10 approaches the departure charging amount V2 at the departure time. This makes it possible to supply a larger amount of electric power to the vehicle 10 in the charging/discharging facility 6 while driving the vehicle 10 from the owned facility 5 to the charging/discharging facility 6.

In this preferred embodiment, as illustrated in FIG. 2, the reservation manager 80 includes the user information acquirer 84a, the facility information acquirer 84b, the distance calculator 84c, and the distance determiner 84d. In step S201 in FIG. 5, the user information acquirer 84a acquires the user information U1 including the user position P1 that is positional information concerning the user. In step S203 in FIG. 5, the facility information acquirer 84b acquires the facility information U2 including the facility position P2 that is a location of the charging/discharging facility 6. In step S205 in FIG. 5, the distance calculator 84c calculates the predicted distance D1 that is the distance from the user position P1 to the facility position P2. In step S207 in FIG. 5, the distance determiner 84d determines whether the predicted distance D1 is less than or equal to the predetermined determination distance ND1. If the distance determiner 84d determines that the predicted distance D1 is less than or equal to the determined distance ND1, the user notifier 83 notifies the user of the discharging recommendation time zone T1 in step S211 in FIG. 5. In this manner, if the predicted distance D1 is less than or equal to the determined distance ND1, it is estimated that the user is in a place close to the charging/discharging facility 6, and it is considered that the user is highly likely to make a reservation for charging the vehicle 10 in the charging/discharging facility 6. Thus, it is possible to notify the user who is considered to be likely to make a reservation for charging, of the discharging recommendation time zone T1.

In this preferred embodiment, the user position P1 is the current position of the vehicle 10 used by the user. This can more appropriately specify the position of the vehicle 10 as a target of charging.

In this preferred embodiment, as illustrated in FIG. 2, the reservation manager 80 includes the cancellation information acquirer 87a, the cancellation determiner 87b, and the cancellation controller 88. The cancellation information acquirer 87a acquires the user position P1 and the current SOC 12, which is the current SOC of the secondary battery 11 in the vehicle 10, at the preliminary time t11 that is a time before the start time of the reservation time zone T2 by a predetermined preliminary period, as in step S301 in FIG. 6. The cancellation determiner 87b determines, as in step S303 in FIG. 6, whether the predicted distance D1 from the user position P1 acquired by the cancellation information acquirer 87a to the facility position P2 is longer than the predetermined cancellation determination distance ND2 or not, and also determines whether the current SOC 12 is greater than the predetermined determination SOC 13 or not. The cancellation controller 88 cancels the reservation time zone T2 in the discharging recommendation time zone T1 if the cancellation determiner 87b determines that the predicted distance D1 is longer than the cancellation determination distance ND2 and that the current SOC 12 is greater than the determination SOC 13. Accordingly, it is considered that a user using a vehicle 10 located far from the reserved charging/discharging facility 6 and sufficiently charged is highly unlikely to arrive at the charging/discharging facility 6 in the reservation time zone T2. Therefore, by canceling a reservation of a user having a high possibility of not arriving at the charging/discharging facility 6 by the reservation time zone T2, the canceled reservation time zone T2 can be made available for other users to reserve.

In this preferred embodiment, as illustrated in FIG. 2, the reservation manager 80 includes the model generator 89b and the machine learner 89a. In step S401 in FIG. 7, the cancellation information acquirer 87a acquires the user position P1 at the preliminary time t11. The model generator 89b generates the learning model MD1 that receives, as inputs, the user position P1 of a user who made a reservation for charging with respect to the charging/discharging facility 6 previously, and presence/absence information of arrival indicating whether the user at the user position P1 has arrived at the charging/discharging facility 6 by the reservation time zone T2, and outputs the arrival probability R1 that is the probability that the user at the user position P1 arrives at the charging/discharging facility 6 by the reservation time zone T2. In step S403 in FIG. 7, the machine learner 89a inputs the user position P1 acquired by the cancellation information acquirer 87a to the learning model MD1 and outputs the arrival probability R1. In step S405 in FIG. 7, the cancellation determiner 87b determines whether the arrival probability R1 is less than the predetermined determination probability NR1 or not. If the cancellation determiner 87b determines that the arrival probability R1 is less than the determination probability NR1, the cancellation controller 88 cancels the reservation time zone T2 in the discharging recommendation time zone T1 as shown in step S409 in FIG. 7. Accordingly, it is considered that a user with a low arrival probability R1 is highly unlikely to arrive at the charging/discharging facility 6 in the reservation time zone T2. Therefore, by canceling a reservation of a user with a low arrival probability R1, the canceled reservation time zone T2 can be made available for other users to reserve.

As described above, the specification includes the disclosures described in the following items.

### Item 1:

A charging/discharging management device including:
a reservation manager; and
a charging/discharging manager, wherein
the reservation manager includes
   a time zone acquirer that acquires a discharging recommendation time zone, the discharging recommendation time zone being a time zone in which a facility charging/discharging device in a charging/discharging facility recommends discharging,
   a user notifier that notifies a user using a vehicle including a secondary battery as a driving source, of the discharging recommendation time zone,
   a reservation acquirer that acquires a reservation time zone in which the facility charging/discharging device is used in the discharging recommendation time zone, from the user notified by the user notifier, and
   an updater that updates the discharging recommendation time zone to prevent other users from making a reservation for using the facility charging/discharging device in the reservation time zone, and
the charging/discharging manager includes
   a first planning acquirer that acquires a current remaining battery level, the current remaining battery level being a current remaining level of the secondary battery in the vehicle,
   a second planning acquirer that acquires a stay time zone in which a user stays in an owned facility owned by the user,
   a third planning acquirer that acquires a required charging amount, the required charging amount being a charging amount required for the vehicle traveling from an owned-facility position that is a position of the owned facility to a facility position that is a position of the charging/discharging facility, and
   a planner that makes a charging/discharging plan for charging and discharging the vehicle by an owned charging/discharging device in the owned facility such that a remaining battery level of the secondary battery in the vehicle approaches from the current remaining battery level to a departure charging amount set based on the required charging amount by a departure time at an end of the stay time zone.

### Item 2:

The charging/discharging management device of Item 1, wherein
the reservation manager includes
   a user information acquirer that acquires user information including a user position, the user position being position information concerning the user,
   a facility information acquirer that acquires facility information including the facility position that is a location of the charging/discharging facility,
   a distance calculator that calculates a predicted distance, the predicted distance being a distance from the user position to the facility position, and
   a distance determiner that determines whether the predicted distance is less than or equal to a predetermined determination distance or not, and
the user notifier notifies a user of the discharging recommendation time zone if the distance determiner determines that the predicted distance is less than or equal to the determination distance.

### Item 3:

The charging/discharging management device of Item 2, wherein the user position is a current position of the vehicle used by the user.

### Item 4:

The charging/discharging management device of Item 3, wherein
the reservation manager includes
a cancellation information acquirer that acquires the user position and a current SOC that is a current SOC of the secondary battery in the user, at a preliminary time that is a time before a start time of the reservation time zone by a predetermined preliminary period,
a cancellation determiner that determines whether or not the predicted distance from the user position acquired by the cancellation information acquirer to the facility position is longer than a predetermined cancellation determination distance and determines whether or not the current SOC is larger than a predetermined determination SOC, and
a cancellation controller that cancels the reservation time zone in the discharging recommendation time zone if the cancellation determiner determines that the predicted distance is longer than the cancellation determination distance and that the current SOC is larger than the determination SOC.

### Item 5:

The charging/discharging management device of Item 3 or 4, wherein
the reservation manager includes
a cancellation information acquirer that acquires the user position at a preliminary time that is a time before a start time of the reservation time zone by a predetermined preliminary period,
a model generator that generates a leaning model that receives, as inputs, the user position of a user who made a reservation for charging with respect to the charging/discharging facility previously, and presence/absence information indicating whether a user at the user position has arrived at the charging/discharging facility by the reservation time zone and outputs an arrival probability that is a probability that the user at the user position arrives at the charging/discharging facility by the reservation time zone,
a machine learner that inputs the user position acquired by the cancellation information acquirer to the leaning model, and outputs the arrival probability,
a cancellation determiner that determines whether the arrival probability is less than a predetermined determination probability or not, and
a cancellation controller that cancels the reservation time zone in the discharging recommendation time zone if the cancellation determiner determines that the arrival probability is less than the determination probability.

### Item 6:

A charging/discharging management system including:
the charging/discharging management device of any one of Items 1 to 5;
the owned charging/discharging device; and
an owned controller that controls the owned charging/discharging device, wherein
the charging/discharging manager includes a plan transmitter that transmits the charging/discharging plan made by the planner to the owned controller, and
the owned controller includes a charging/discharging controller that controls the owned charging/discharging device in accordance with the charging/discharging plan to control charging and discharging of the vehicle such that the remaining battery level of the vehicle connected to the owned charging/discharging device approaches the departure charging amount at the departure time.

## Claims

1. A charging/discharging management device (70) comprising:
a reservation manager (80), and
a charging/discharging manager (90), wherein
the reservation manager (80) includes
a time zone acquirer (81) that acquires a discharging recommendation time zone (T1), the discharging recommendation time zone (T1) being a time zone in which a facility charging/discharging device (41) in a charging/discharging facility (6) recommends discharging,
a user notifier (83) that notifies a user using a vehicle (10) including a secondary battery (11) as a driving source, of the discharging recommendation time zone (T1),
a reservation acquirer (85) that acquires a reservation time zone (T2) in which the facility charging/discharging device (41) is used in the discharging recommendation time zone (T1), from the user notified by the user notifier (83), and
an updater (86) that updates the discharging recommendation time zone (T1) to prevent other users from making a reservation for using the facility charging/discharging device (41) in the reservation time zone (T2), and
the charging/discharging manager (90) includes
a first planning acquirer (91) that acquires a current remaining battery level (V10), the current remaining battery level (V10) being a current remaining level of the secondary battery (11) in the vehicle (10),
a second planning acquirer (92) that acquires a stay time zone (T3) in which a user stays in an owned facility (5) owned by the user,
a third planning acquirer (93) that acquires a required charging amount (V1), the required charging amount (V1) being a charging amount required for the vehicle (10) traveling from an owned-facility position (P3) that is a position of the owned facility (5) to a facility position (P2) that is a position of the charging/discharging facility (6), and
a planner (96) that makes a charging/discharging plan (P100) for charging and discharging the vehicle (10) by an owned charging/discharging device (21) in the owned facility (5) such that a remaining battery level of the secondary battery (11) in the vehicle (10) approaches from the current remaining battery level (V10) to a departure charging amount (V2) set based on the required charging amount (V1) by a departure time at an end of the stay time zone (T3).

2. The charging/discharging management device (70) according to claim 1, wherein
the reservation manager (80) includes
a user information acquirer (84a) that acquires user information (U1) including a user position (P1), the user position (P1) being position information concerning the user,
a facility information acquirer (84b) that acquires facility information (U2) including the facility position (P2) that is a location of the charging/discharging facility (6),
a distance calculator (84c) that calculates a predicted distance (D1), the predicted distance (D1) being a distance from the user position (P1) to the facility position (P2), and
a distance determiner (84d) that determines whether the predicted distance (D1) is less than or equal to a predetermined determination distance (ND1) or not, and
the user notifier (83) notifies a user of the discharging recommendation time zone (T1) if the distance determiner (84d) determines that the predicted distance (D1) is less than or equal to the determination distance (ND1).

3. The charging/discharging management device (70) according to claim 2, wherein the user position (P1) is a current position of the vehicle (10) used by the user.

4. The charging/discharging management device (70) according to claim 3, wherein
the reservation manager (80) includes
a cancellation information acquirer (87a) that acquires the user position (P1) and a current SOC (12) that is a current SOC of the secondary battery (11) in the user, at a preliminary time (t11) that is a time before a start time of the reservation time zone (T2) by a predetermined preliminary period,
a cancellation determiner (87b) that determines whether or not the predicted distance (D1) from the user position (P1) acquired by the cancellation information acquirer (87a) to the facility position (P2) is longer than a predetermined cancellation determination distance (ND2) and determines whether or not the current SOC (12) is larger than a predetermined determination SOC (13), and
a cancellation controller (88) that cancels the reservation time zone (T2) in the discharging recommendation time zone (T1) if the cancellation determiner (87b) determines that the predicted distance (D1) is longer than the cancellation determination distance (ND2) and that the current SOC (12) is larger than the determination SOC (13).

5. The charging/discharging management device (70) according to claim 3, wherein
the reservation manager (80) includes
a cancellation information acquirer (87a) that acquires the user position (P1) at a preliminary time (t11) that is a time before a start time of the reservation time zone (T2) by a predetermined preliminary period,
a model generator (89b) that generates a leaning model (MD1) that receives, as inputs, the user position (P1) of a user who made a reservation for charging with respect to the charging/discharging facility (6) previously, and presence/absence information indicating whether a user at the user position (P1) has arrived at the charging/discharging facility (6) by the reservation time zone (T2) and outputs an arrival probability (R1) that is a probability that the user at the user position (P1) arrives at the charging/discharging facility (6) by the reservation time zone (T2),
a machine learner (89a) that inputs the user position (P1) acquired by the cancellation information acquirer (87a) to the leaning model (MD1), and outputs the arrival probability (R1),
a cancellation determiner (87b) that determines whether the arrival probability (R1) is less than a predetermined determination probability (NR1) or not, and
a cancellation controller (88) that cancels the reservation time zone (T2) in the discharging recommendation time zone (T1) if the cancellation determiner (87b) determines that the arrival probability (R1) is less than the determination probability (NR1).

6. A charging/discharging management system (100) comprising:
the charging/discharging management device (70) according to any one of claims 1 to 5;
the owned charging/discharging device (21); and
an owned controller (23) that controls the owned charging/discharging device (21), wherein
the charging/discharging manager (90) includes a plan transmitter (97) that transmits the charging/discharging plan (P100) made by the planner (96) to the owned controller (23), and
the owned controller (23) includes a charging/discharging controller (31) that controls the owned charging/discharging device (21) in accordance with the charging/discharging plan (P100) to control charging and discharging of the vehicle (10) such that the remaining battery level of the vehicle (10) connected to the owned charging/discharging device (21) approaches the departure charging amount (V2) at the departure time.
